# EUROPEAN PATENT APPLICATION

(11) **EP 4 761 440 A1**
(43) Date of publication of application: **17.06.2026**
(21) Application number: 23948551.9
(22) Date of filing: 10.08.2023
(51) Int. Cl.: H04W 72/30, H04W 4/06, H04W 28/04

(54) **TERMINAL AND COMMUNICATION METHOD**

(71) Applicant: NTT DOCOMO, INC., Tokyo 100-6150 (JP)
(72) Inventor: OKANO, Mayuko, Tokyo 100-6150 (JP); YOSHIOKA, Shohei, Tokyo 100-6150 (JP); KUMAGAI, Shinya, Tokyo 100-6150 (JP); HARADA, Hiroki, Tokyo 100-6150 (JP)
(74) Representative: Hoffmann Eitle
(86) International application number: PCT/JP2023/029377
(87) International publication number: WO 2025/032839

(57) **Abstract**

A terminal includes a receiver configured to receive a multicast MBS (multicast-broadcast services)- PDSCH (physical downlink shared channel) from a base station; and a controller configured to extend, when HARQ (hybrid automatic repeat request) feedback of the multicast MBS-PDSCH is disabled, a period of time until an HPN (HARQ process number) corresponding to the multicast MBS-PDSCH is released.

## Description

### TECHNICAL FIELD

The present invention relates to a terminal and a communication method in a radio communication system.

### BACKGROUND ART

In NR (New Radio) (also referred to as "5G"), which is a successor system to LTE (Long Term Evolution), technologies that satisfy requirements, such as a large-capacity system, high data transmission rate, low delay, simultaneous connection of a large number of terminals, low cost, and power saving, have been considered (e.g., Non-Patent Literature 1).

For LTE or NR, UE categories or UE capabilities for Internet of Things (IoT) are defined, in which functions normally mandatory for regular devices, such as transmit/receive bandwidth and the number of antennas are reduced. For example, eMTC (enhanced machine type communication) and NB-IoT (narrow band IoT) are defined for LTE, and RedCap (reduced capability) is defined for NR.

Studies concerning systems beyond 5G, or future systems such as 6G, have been initiated. Further improvements in communication performance and diversification of use cases are expected in these future systems.

### CITATION LIST

### Non-Patent Literature

[Non-Patent Literature 1] 3GPP TS 38.300 V17.5.0 (2023-06)
[Non-Patent Literature 2] 3GPP TS 38.213 V17.6.0 (2023-06)
[Non-Patent Literature 3] 3GPP TS 38.214 V17.6.0 (2023-06)
[Non-Patent Literature 4] 3GPP TS 38.331 V17.5.0 (2023-06)
[Non-Patent Literature 5] 3GPP TS 38.321 V17.5.0 (2023-06)

### SUMMARY OF INVENTION

### TECHNICAL PROBLEM

In a future system (e.g., NR release 18 and NR successor 6G), an eRedCap (enhanced Reduced Capability) with further reduced functions than the RedCap studied in NR Release 17 has been studied. For example, the baseband processing capability of an eRedCap terminal is limited. Herein, there is a possibility that a channel with a bandwidth exceeding the baseband processing capability cannot be transmitted or received appropriately.

MBS (Multicast-Broadcast Services) function is supported in NR. In the MBS function, CFR (Common Frequency Resource) is configured, and a single DL transmission is received by a plurality of UEs on a CFR. Herein, in the case where an eRedCap terminal supports the MBS function, an appropriate operation is required in consideration of processing capability.

It is an object of the present invention to provide a radio communication system in which a terminal having reduced functions supports the MBS (Multicast-Broadcast Services) function.

### SOLUTION TO PROBLEM

According to the disclosed technology, there is provided a terminal including a receiver configured to receive a multicast MBS (Multicast-Broadcast Services)-PDSCH (Physical Downlink Shared Channel) from a base station; and a controller configured to extend, when HARQ (hybrid automatic repeat request) feedback of the multicast MBS-PDSCH is disabled, a period of time until an HPN (HARQ process number) corresponding to the multicast MBS-PDSCH is released.

### ADVANTAGEOUS EFFECT OF INVENTION

According to the disclosed technology, in a radio communication system, a terminal having reduced functions can support an MBS (Multicast-Broadcast Services) function.

### BRIEF DESCRIPTION OF DRAWINGS

[FIG. 1] FIG. 1 is a diagram illustrating a configuration example of a radio communication system.
[FIG. 2] FIG. 2 is a diagram illustrating an example of an MBS function according to an embodiment of the present invention.
[FIG. 3] FIG. 3 is a diagram illustrating an example of a CFR according to the embodiment of the present invention.
[FIG. 4] FIG. 4 is a diagram illustrating an example of broadcast according to the embodiment of the present invention.
[FIG. 5] FIG. 5 is a diagram illustrating Example (1) of multiplexing according to the embodiment of the present invention.
[FIG. 6] FIG. 6 is a diagram illustrating Example (2) of multiplexing according to the embodiment of the present invention.
[FIG. 7] FIG. 7 is a diagram illustrating an example of HARQ feedback according to the embodiment of the present invention.
[FIG. 8] FIG. 8 is a diagram illustrating an example of a functional configuration of a base station 10 according to the embodiment of the present invention.
[FIG. 9] FIG. 9 is a diagram illustrating an example of a functional configuration of a terminal 20 according to the embodiment of the present invention.
[FIG. 10] FIG. 10 is a diagram illustrating an example of a hardware configuration of the base station 10 or the terminal 20 according to the embodiment of the present invention.
[FIG. 11] FIG. 11 illustrates an example of a configuration of a vehicle 2001 according to an embodiment of the present invention.

### DESCRIPTION OF EMBODIMENTS

Hereinafter, an embodiment of the present invention will be described with reference to the drawings. Note that the embodiments described below are only examples, and the embodiments to which the present invention is applied are not limited to the following embodiments.

In the operation of the radio communication system according to the embodiment of the present invention, existing technologies are appropriately used. However, the existing technologies are, for example, existing LTE, but are not limited to existing LTE. In addition, the term "LTE" used in this specification has a broad meaning including LTE-Advanced and a system after LTE-Advanced (e.g., NR) unless otherwise specified.

In the embodiments of the present invention described below, terms such as SS (Synchronization Signal), PSS (Primary SS), SSS (Secondary SS), PBCH (Physical Broadcast Channel), PRACH (Physical Random Access Channel), PDCCH (Physical Downlink Control Channel), PDSCH (Physical Downlink Shared Channel), PUCCH (Physical Uplink Control Channel), and PUSCH (Physical Uplink Shared Channel) used in the existing LTE are used. This is for convenience of description, and signals, functions, etc. similar to these may be called by other names. The above-mentioned terms in NR correspond to NR-SS, NR-PSS, NR-SSS, NR-PBCH, NR-PRACH, and the like. However, even a signal used in NR, such a signal is not necessarily specified as "NR-".

In the embodiment of the present invention, the duplex system may be a TDD (Time Division Duplex) system, an FDD (Frequency Division Duplex) system, or other systems (e.g., Flexible Duplex, etc.).

In the embodiment of the present invention, "configure" a radio parameter or the like may mean that a predetermined value is pre-configured or that a radio parameter notified from the base station 10 or the terminal 20 is configured.

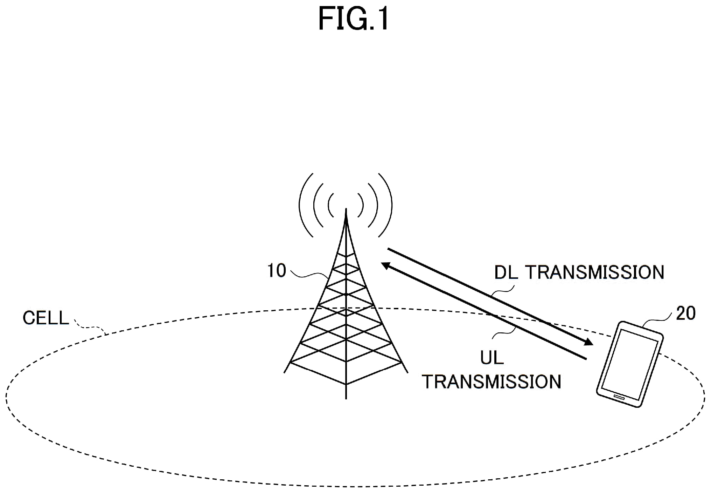

FIG. 1 is a diagram illustrating Configuration Example (1) of a radio communication system in the embodiment of the present invention. As illustrated in FIG. 1, the radio communication system in the embodiment of the present invention includes a base station 10 and a terminal 20. One base station 10 and one terminal 20 are illustrated in FIG. 1 as an example; however, the radio communication system may include more than one base station 10 and more than one terminal 20.

The base station 10 is a communication device which provides one or more cells for radio communication with the terminal 20. The physical resources of the radio signal are defined by a time domain and a frequency domain, the time domain may be defined by the number of OFDM (Orthogonal Frequency Division Multiplexing) symbols, and the frequency domain may be defined by the number of subcarriers or the number of resource blocks. The base station 10 transmits a synchronization signal and system information to the terminal 20. The synchronization signal is, for example, NR-PSS and NR-SSS. The system information is transmitted, for example, by NR-PBCH and is also referred to as "broadcast information". The synchronization signal and system information may be referred to as "SSB" (SS/PBCH block). As illustrated in FIG. 1, the base station 10 transmits a control signal or data to the terminal 20 by DL (Downlink) and receives a control signal or data from the terminal 20 by UL (Uplink). Both the base station 10 and the terminal 20 can transmit and receive signals by beamforming. Both the base station 10 and the terminal 20 can apply MIMO (Multiple Input Multiple Output) communication to DL or UL. Both the base station 10 and the terminal 20 may communicate via a secondary cell (SCell) and a primary cell (PCell) by CA (Carrier Aggregation). Furthermore, the terminal 20 may communicate via a primary cell of the base station 10 and a primary secondary cell group cell (Primary SCG Cell, or PSCell) of another base station 10 by DC (Dual Connectivity).

The terminal 20 is a communication device having a radio communication function, such as a smartphone, a cellular phone, a tablet, a wearable terminal, or an M2M (Machine-to-Machine) communication module. As illustrated in FIG. 1, the terminal 20 receives a control signal or data from the base station 10 by DL and transmits the control signal or data to the base station 10 by UL, thereby utilizing various communication services provided by the radio communication system. The terminal 20 also receives various reference signals transmitted from the base station 10 and measures the propagation path quality based on the reception result of the reference signals.

The terminal 20 can perform carrier aggregation in which a plurality of cells (Multiple CCs (Component Carrier)) are bundled to communicate with the base station 10. In carrier aggregation, one PCell (Primary Cell) and one or more SCells (Secondary Cell) are used. A PUCCH-SCell with PUCCH may be used.

First, RedCap of the conventional NR Release 17 will be described. A maximum bandwidth supported by a RedCap UE under consideration in NR Release 17 is 20 MHz in FR1 (Frequency Range 1) and 100 MHz in FR2 (Frequency Range 2). A RedCap UE is required to coexist with a non-RedCap UE in the system.

A RedCap UE and a non-RedCap UE may share the same initial DL-BWP (Downlink Bandwidth Part) (including a subcarrier spacing, a bandwidth, and a location) that is configured by an MIB (Master Information Block). On the other hand, an initial DL-BWP having a separated or added subcarrier spacing, bandwidth, and location for a RedCap UE may be configured.

A RedCap UE can share an initial DL-BWP for a non-RedCap UE (hereinafter also referred to as "DL-BWP #0") in the case where a maximum bandwidth supported by the RedCap UE is not exceeded.

In addition, the NR Release 17 technical specifications require that DL-BWPs and UL-BWPs with the same index have the same center frequency in the case of TDD to avoid RF retuning.

After establishing or re-establishing a dedicated RRC connection, a RedCap UE assumes that an initial DL-BWP and an active DL-BWP will be less than or equal to a maximum DL bandwidth supported by the RedCap UE. THe RedCap UE is provided with a DL-BWP by "initialDownlinkBWP" in "DownlinkConfigCommonRedCapSIB" and a UL-BWP by "initialUplinkBWP" in "UplinkConfigCommonRedCapSIB". In the case where "initialUplinkBWP" in "UplinkConfigCommonSIB" indicates a UL-BWP greater than a maximum UL-BWP supported by the RedCap UE, the RedCap UE assumes that the UL-BWP is provided by "initialUplinkBWP" in "UplinkConfigCommonRedCapSIB".

The RedCap UE may be provided with a DL-BWP other than an initial DL-BWP by "BWP-DownlinkDedicated". The RedCap UE may be provided with a UL-BWP other than an initial UL-BWP by "BWP-UplinkDedicated" that is less than or equal to the maximum UL bandwidth supported by the RedCap UE.

In the case where the RedCap UE is provided with "RACH-ConfigCommon-RedCap" or "RACH-ConfigCommonTwoStepRA-RedCap", the RedCap UE uses corresponding parameters to perform initial access and random access procedures. In other cases, the RedCap UE uses corresponding parameters provided by "RACH-ConfigCommon" or "RACH-ConfigCommonTwoStepRA".

In the case where the RedCap UE is provided with "initialUplinkBWP" in "UplinkConfigCommonRedCapSIB" and there is no dedicated PUCCH resource configuration, the RedCap UE uses a PUCCH resource configuration provided by "pucch-ResourceCommonRedCap" to transmit PUCCH with HARQ-ACK information. In the case where "disable-FH-PUCCH" is provided in "PUCCH-ConfigCommonRedCap", a PUCCH transmission is disabled.

In the case of an initial DL-BWP provided by "initialDownlinkBWP" in" DownlinkConfigCommonRedCapSIB", the RedCap UE monitors a PDCCH according to a CSS (Common Search Space) set of Type1-PDCCH, and in the case where a RedCap UE does not monitor a PDCCH according to the CSS set of Type2-PDCCH, the RedCap UE recognizes that the initial DL-BWP does not include a SS/PBCH block or a CORESET (Control Resource Set) of index 0.

In the case where the RedCap UE monitors a PDCCH according to the CSS set of Type2-PDCCH, the RedCap UE assumes that: the initial DL-BWP includes a SS/PBCH block and a CORESET of index 0 in the case where the RedCap UE obtains SIB1 using a SS/PBCH block; the initial DL-BWP includes a SS/PBCH block; and the initial DL-BWP does not include a CORESET of index 0 in the case where the initial DL-BWP does not include the SS/PBCH block used by the RedCap UE to obtain SIB1.

In the case of an active DL-BWP provided by "BWP-DownlinkDedicated", the RedCap UE assumes that the active DL-BWP includes a SS/PBCH block and does not include a CORESET of index 0, except for the case where the RedCap UE indicates a function that operates on the DL-BWP without receiving a SS/PBCH block.

Next, the status of RedCap considerations for NR Release 18 is described. In NR Release 18, an eRedCap is being considered to further reduce the complexity of RedCap UEs for NR Release 17. Hereinafter, a reduced-function terminal for NR Release 17 is referred to as a RedCap UE, and an extended-function reduced-function terminal for NR Release 18 is referred to as an eRedCap UE. A RedCap UE is an example of a first reduced-function terminal. An eRedCap UE is an example of a second reduced-function terminal. In other words, the first reduced-function terminal is a terminal in which a first function is reduced, and the second reduced-function terminal is a terminal in which a second function, which is different from the first function (including a case where some of the functions overlap), is reduced.

Impact on network, co-existence of a RedCap UE or eRedCap UE with a non-RedCap UE in a cell, impact on a UE, impact on technical specifications, etc. have been considered. Potential solutions to reduce device complexity, which may complement each other, focus on the following issues.

As a first solution, reducing a UE bandwidth in FR1 to 5 MHz has been considered. This solution may be specified in combination with a relaxed UE processing timeline for a PDSCH and/or a PUSCH and/or CSI.

As a second solution, reducing a UE peak data rate in FR1 has been considered. This solution may include a limited bandwidth for a PDSCH and/or a PUSCH and may be specified in combination with a relaxed UE processing timeline for a PDSCH and/or a PUSCH and/or CSI.

In the case of an eRedCap UE, it is considered that attention needs to be paid for the following issues. The SSB specified in NR release 15 needs to be reused and L1 changes need to be minimized. Also, BWP operation with or without SSB and with or without RF re-tuning needs to be considered. Furthermore, it is considered not to exclude that some solutions of FR1 can be applied to FR2. To further reduce the complexity of UEs, it is considered to define a single type of reduced-function terminal for release 18.

An eRedCap UE may be defined as follows.

For example, in a random-access procedure, the terminal 20 may be defined as an eRedCap UE if at least one of Msg1, Msg3, and MsgA reports that its device is an eRedCap UE. For example, an eRedCap UE may transmit Msg1 or MsgA in a resource specified or configured for an eRedCap UE, or may report that it is an eRedCap UE in a notification field in Msg3 specified for an eRedCap UE.

For example, a terminal 20 that supports a specific UE capability may be defined as an eRedCap UE. The specific UE capability may be, for example, 1)-7) described below.

1) To support a maximum bandwidth of 5 MHz for a PDSCH and a PUSCH in FR1.
2) To support a relaxed UE processing time for a PDSCH, a PUSCH and/or CSI.
3) To support a reduced UE peak data rate in FR1.
4) To support one or two receive branches and a corresponding maximum number of DL-MIMO layers.
5) To support FD (Full Duplex)-FDD or Type A HD (Half Duplex)-FDD in FR1FDD band.
6) To support 64QAM (Quadrature amplitude modulation) or 256QAM in FR1.
7) To not support carrier aggregation or dual connectivity.

The terminal 20 that has reported to the base station 10 that it supports the specific UE capability by the UE capability report may be defined as an eRedCap UE. The existing terminal may be a terminal other than an eRedCap UE.

An eRedCap terminal may support the operations illustrated in 1)-5) below in order to reduce the complexity related to UE-BB.
1) It may be possible to receive DL allocation included in a DCI that allocates a unicast PDSCH resource with a bandwidth exceeding 5 MHz.
2) For a broadcast PDSCH carrying SIB1, the scheduling of SIB1 may exceed 5 MHz as in legacy operation.
3) For a broadcast PDSCH carrying OSI (Other System Information), the scheduling of OSI may exceed 5 MHz as in legacy operation.
4) For a broadcast PDSCH carrying a RAR (Random Access Response), the scheduling of RAR-PDSCH may exceed the maximum number of unicast PRBs that an eRedCap terminal can handle per slot.
5) For a broadcast PDSCH carrying paging, scheduling of the paging channel may exceed 5 MHz as in legacy operation.

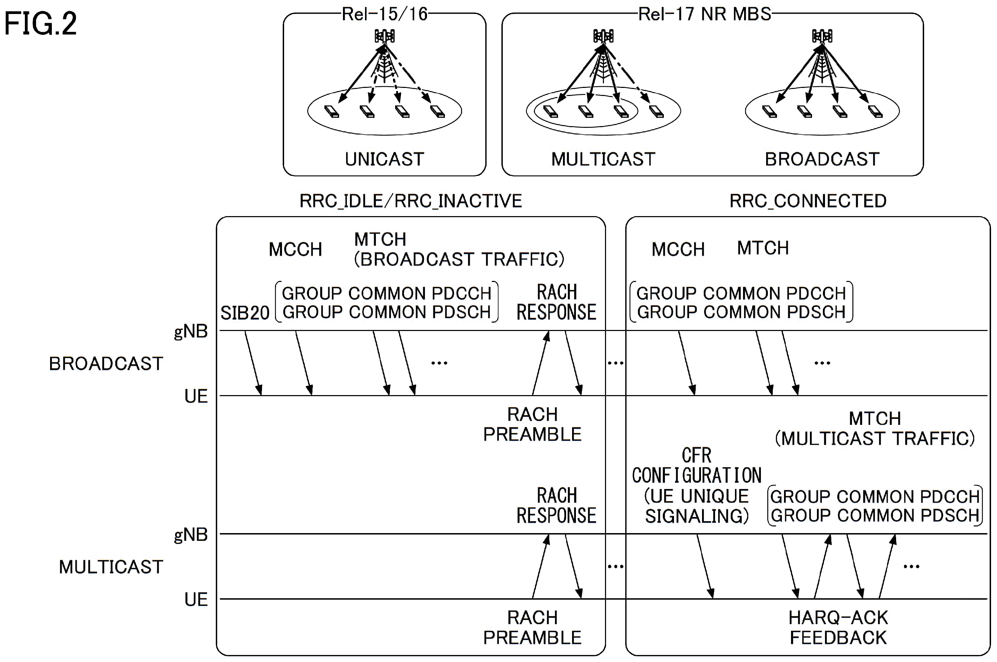

FIG. 2 is a diagram illustrating an example of the MBS function according to the embodiment of the present invention. In NR releases 15 and 16, only unicast was supported. In NR release 17, NR-MBS was introduced to support multicast and broadcast.

As illustrated in FIG. 2, in the RRC_IDLE state and the RRC_INACTIVE state, the UE receives SIB20 to configure the MBS (Multicast-Broadcast Services) function, and the gNB can transmit an MCCH (MBS Control Channel) and an MTCH (MBS Traffic Channel), which are logical channels, to the UE via a group common PDCCH and a group common PDSCH. An MTCH carries broadcast traffic.

In the case where the UR transmits a RACH preamble to the gNB and the gNB transmits a RACH response to the UE, and transitions to the RRC_CONNECTED state, multicast traffic is enabled in addition to broadcast. A CFR (Common Frequency Resource) configuration is transmitted from the gNB to the UE by UE-specific signaling. The UE receives an MTCH carrying multicast traffic via a group common PDCCH and a group common PDSCH and transmits HARQ (Hybrid Automatic Repeat Request)-ACK feedback to the gNB.

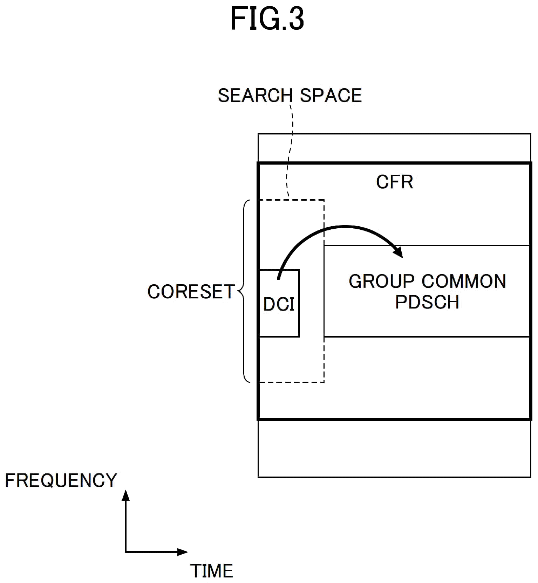

FIG. 3 is a diagram illustrating an example of a CFR according to the embodiment of the present invention. As illustrated in FIG. 3, a search space and a group common PDSCH are arranged in a CFR (Common Frequency Resource). The type of the search space is type 0 or type 0B-CSS for broadcast and type 3-CSS for multicast. The monitoring priority of the CSS is determined based on the index of the search space set. A CORESET is configured in the CFR.

The DCI located in the search space schedules a group common PDSCH. For the DCI format, DCI format 4_0 is used for broadcast, and DCI format 4_1 or 4_2 is used for multicast. The "3+1" DCI size budget is maintained.

For an RNTI (Radio Network Temporary Identifier), for broadcast, an MCCH-RNTI is used to schedule an MCCH, and a G-RNTI is used to schedule an MTCH (see Non-Patent Literature 5). In the case of multicast, a G-RNTI is used for dynamic scheduling, and a G-CS-RNTI is used for semi-persistent scheduling (see Non-Patent Literature 5).

A group common PDSCH may support 1)-3) listed below for broadcast.
1) Semi-persistent or dynamic slot level repetitive transmission
2) RB symbol level rate matching
3) RE level rate matching (for example, LTE-CRS)

A group common PDSCH may support 1)-3) as listed below for multicast.
1) Semi-persistent or dynamic repeated slot level transmission
2) RB symbol level rate matching
3) RE level rate matching (for example, LTE-CRS, ZP CSI-RS)

Herein, the operation in the case where an eRedCap terminal supports the MBS function, that is, the operation for receiving a broadcast PDSCH and/or a multicast PDSCH, is unclear, and it is necessary to specify an appropriate operation in consideration of the processing capability of the eRedCap terminal.

RedCap in the embodiment of the present invention may be replaced by eRedCap. eRedCap in the embodiment of the present invention may be replaced by RedCap. RedCap in the embodiment of the present invention may be replaced by first RedCap. eRedCap in the embodiment of the present invention may be replaced by second RedCap.

One CFR to which a broadcast MBS-PDSCH and a DCI for scheduling the PDSCH are transmitted is configured for a cell. The broadcast CFR may have the characteristics described in 1)-4) below.
1) Any bandwidth within a carrier bandwidth may be configured as a CFR.
2) A CFR fully includes a CORESET#0.
3) The same SCS and CP as an initial BWP are used.
4) One CORESET other than a CORESET#0 may be configured.

On the other hand, different initial BWPs may be configured for a RedCap terminal and/or an eRedCap terminal and a non-RedCap terminal and/or a non-eRedCap terminal. An initial BWP for a RedCap terminal or an eRedCap terminal that is configured separately from a non-RedCap terminal and/or a non-eRedCap terminal may be called a "separate initial BWP for RedCap and/or eRedCap". The separate initial BWP for RedCap and/or eRedCap need not include a band for which a CORESET#0 is configured.

Therefore, it may be clarified how the CFR is configured in a cell that accommodates a RedCap terminal and/or an eRedCap terminal and a non-RedCap terminal and/or a non-eRedCap terminal.

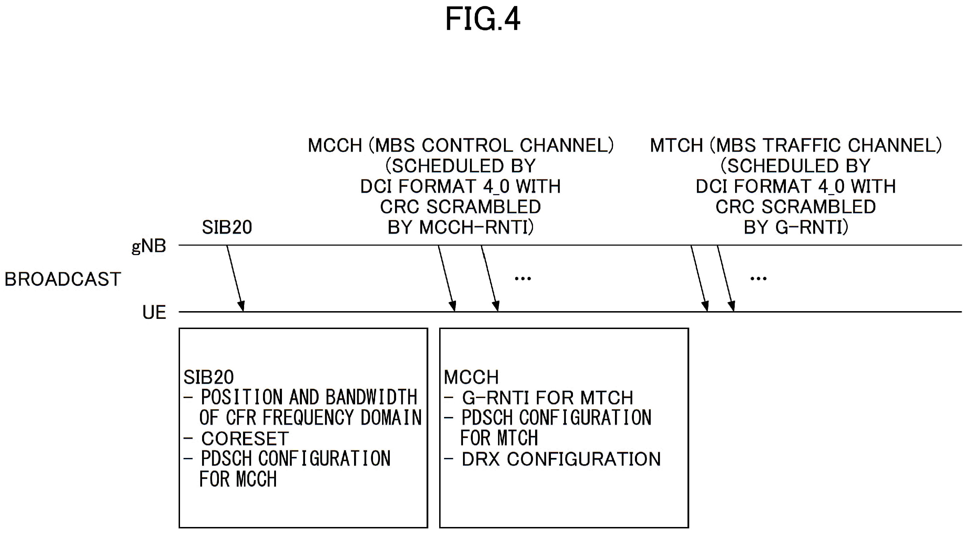

FIG. 4 is a diagram illustrating an example of broadcast according to the embodiment of the present invention. As illustrated in FIG. 4, the UE receives SIB20 from the gNB. The SIB20 may include information regarding a location and a bandwidth of the frequency domain of a CFR (which may be notified by the information element LocationAndBandwidth), a CORESET, and a PDSCH configuration for an MCCH.

The MCCH is an MBS control channel and is scheduled by DCI format 4_0 with CRC scrambled by an MCCH-RNTI. The MCCH may include a G-RNTI for an MTCH, a PDSCH configuration for an MTCH, and a DRX configuration. The MTCH is an MBS traffic channel and is scheduled by DCI format 4_0 with CRC scrambled by G-RNTI. The UE receives the MCCH, and receives the MTCH based on DCI format 4_0 received via the MCCH.

For the RedCap terminal and/or the eRedCap terminal, separate CFRs may be configured for broadcast MBS. For example, one or more CFRs for the separate broadcast MBS may be configured for a single cell.

For example, a separate CFR for broadcast MBS may be configured in SIB20. The RedCap terminal and/or the eRedCap terminal may interpret the LocationAndBandwidth parameter of the CFR as a configuration in the separate initial BWP for RedCap and/or eRedCap.

The separate CFR for broadcast MBS for the RedCap terminal and/or the eRedCap terminal may be assumed to be configured in the band of the separate initial BWP for RedCap and/or eRedCap. The separate CFR for broadcast MBS for the RedCap terminal and/or the eRedCap terminal may be assumed to be configured to include the band of the separate initial BWP for RedCap and/or eRedCap.

The separate CFR for broadcast MBS for the RedCap terminal and/or the eRedCap terminal need not include the band of the initial BWP for the non-RedCap terminal and/or the non-eRedCap terminal. The separate CFR for broadcast MBS for the RedCap terminal and/or the eRedCap terminal need not include a CORESET#0.

In the case where the separate CFR for broadcast MBS for the RedCap terminal and/or the eRedCap terminal is not configured, the RedCap terminal and/or the eRedCap terminal may use a CFR configured for the non-RedCap terminal and/or the non-eRedCap terminal and may not expect to receive DCI format 4_0, the MCCH, and the MTCH.

For the RedCap terminal and/or the eRedCap terminal, a separate CORESET may also be configured for broadcast MBS. The separate CORESET for the RedCap terminal and/or the eRedCap terminal may be configured by SIB20. The separate CORESET for the RedCap terminal and/or the eRedCap terminal may be assumed to be configured in the band of the separate initial BWP for RedCap and/or eRedCap.

The separate CORESET for the RedCap terminal and/or the eRedCap terminal may be included in the separate CFR for the RedCap terminal and/or the eRedCap terminal or in the CFR shared between the non-RedCap terminal and/or the non-eRedCap terminal.

In the case where the separate CORESET for a RedCap terminal and/or an eRedCap terminal is not configured, the RedCap terminal and/or the eRedCap terminal may use a CORESET or a CORESET#0 configured for the non-RedCap terminal and/or the non-eRedCap terminal.

The CFR may be configured to include the initial BWP and/or the separate initial BWP for RedCap and/or eRedCap. The CFR need not include a CORESET#0 in the case where the initial BWP for the non-RedCap terminal and/or the non-eRedCap terminal is not included.

In the case where the separate initial BWP is configured for the RedCap terminal and/or the eRedCap terminal, the RedCap terminal and/or the eRedCap terminal need not assume the CFR configuration and the reception of the DCI format 4_0, the MCCH, and the MTCH. For example, the RedCap terminal and/or the eRedCap terminal may assume that the CFR configuration and the reception of the DCI format 4_0, the MCCH, and the MTCH can be configured only in the case where the RedCap terminal and/or the eRedCap terminal shares the initial BWP with the non-RedCap terminal.

In the case where the separate initial BWP is configured for the RedCap terminal and/or the eRedCap terminal and the separate initial BWP does not include a CORESET#0, the RedCap terminal and/or the eRedCap terminal need not assume the CFR configuration and the reception of the DCI format 4_0, the MCCH, and the MTCH.

It may be assumed that an MCCH-RNTI and/or a G-RNTI of the RedCap terminal and/or the eRedCap terminal is specified or configured, and the DCI format 4_0 is scrambled by the RNTI of the RedCap terminal and/or the eRedCap terminal.

It may be assumed that an DCI format of the RedCap terminal and/or the eRedCap terminal is specified or configured, and the MCCH and MTCH are scheduled by the DCI format of the RedCap terminal and/or the eRedCap terminal.

It may be assumed that the CSS of the RedCap terminal and/or the eRedCap terminal is specified or configured, and the DCI format 4_0 is transmitted in the CSS of the RedCap terminal and/or the eRedCap terminal.

With the above-described operation, the MCCH and the MTCH can be scheduled separately for the RedCap terminal and/or the eRedCap terminal, and the band limitation operation of the RedCap terminal and/or the eRedCap terminal can be avoided for the non-RedCap terminal and/or the non-eRedCap terminal.

A PDSCH or PUSCH bandwidth that can be processed per slot of the eRedCap terminal is limited to 5 MHz. In order to perform PDSCH reception processing, i.e., PDSCH decoding and ACK/NACK transmission preparation, at the same PDSCH processing time as for the existing terminal, the number of RBs exceeding 5 MHz cannot be allocated to the unicast PDSCH for the eRedCap terminal.

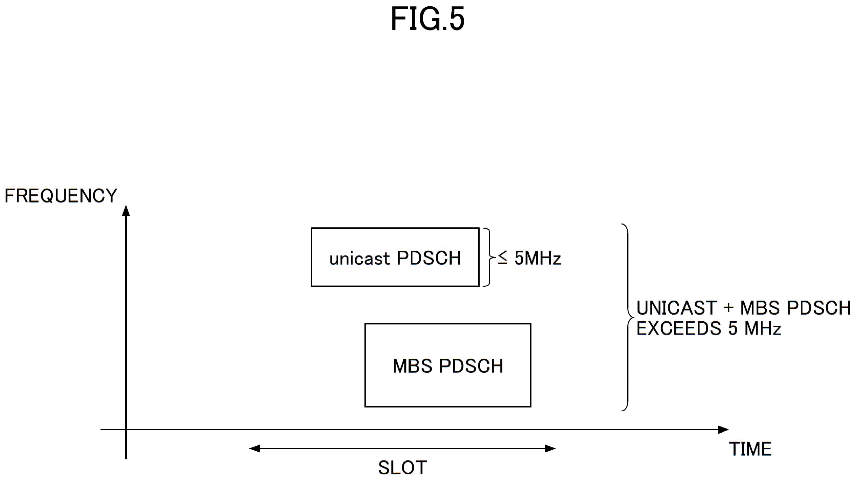

FIG. 5 is a diagram illustrating Example (1) of multiplexing according to the embodiment of the present invention. As illustrated in FIG. 5, for the existing terminal, a single unicast PDSCH and either a broadcast MBS-PDSCH or a multicast MBS-PDSCH can be frequency-multiplexed within the same slot with overlapping time resources.

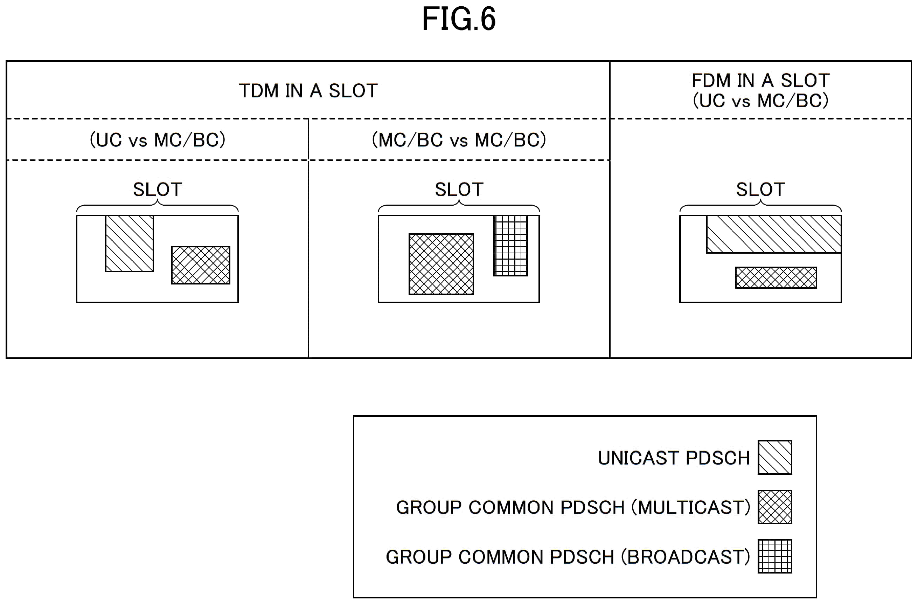

FIG. 6 is a diagram illustrating Example (2) of multiplexing according to the embodiment of the present invention. As illustrated in FIG. 6, a unicast PDSCH and an MBS-PDSCH may be time-division multiplexed (TDM) or frequency-division multiplexed (FDM) within a slot. For example, a unicast PDSCH and a multicast or broadcast group common PDSCH can be time-division multiplexed within a slot. For example, a multicast or broadcast group common PDSCH and a multicast or broadcast group common PDSCH can be time-division multiplexed within a slot. For example, a unicast PDSCH and a multicast or broadcast group common PDSCH can be frequency-division multiplexed within a slot.

Herein, even in the case where a unicast PDSCH itself does not exceed 5 MHz, it is necessary to appropriately configure the frequency multiplexing of a plurality of PDSCHs within a single slot in consideration of the processing capability of an eRedCap terminal, in the case where the total PDSCH bandwidth, namely the number of RBs, which results from multiplexing the unicast PDSCH not exceeding 5 MHz together with a broadcast MBS-PDSCH or a multicast MBS-PDSCH multiplexed within the same slot.

Therefore, restrictions on multiplexing a plurality of PDSCHs in the same slot and/or adjacent slots may be prescribed for the eRedCap terminal.

A unicast PDSCH may be a PDSCH scheduled by a DCI having a CRC scheduled by at least one of a C-RNTI, an MCS-C-RNTI, or a CS-RNTI, and the RNTI is not limited thereto.

A broadcast MBS-PDSCH may be a PDSCH scheduled by a DCI having a CRC scheduled by at least one of an MCCH-RNTI or a G-RNTI, and the RNTI is not limited thereto. A broadcast MBS-PDSCH may be an MCCH or an MTCH.

A multicast MBS-PDSCH may be a PDSCH scheduled by at least one of a G-RNTI, a G-CS-RNTI, or a DCI with scrambled CRC, but not limited to RNTI.

Regarding multiplexing within a slot, a PDSCH to be frequency-multiplexed may overlap partially in the time domain, may overlap entirely in the time domain, or may be specified to be multiplexed within a slot even in the case where the time domain does not overlap as long as the PDSCH is scheduled within the same slot.

The eRedCap terminal may perform Option (1) or Option (2) as described below with respect to restrictions on multiplexing of a plurality of PDSCHs within the same slot and/or adjacent slots.

Option (1): The eRedCap terminal may assume that any two PDSCHs among a unicast PDSCH, a broadcast MBS-PDSCH, or a multicast MBS-PDSCH may be scheduled within the same slot and/or adjacent slots. For example, it may be assumed that a total of more than 5 MHz may be scheduled, or it may be assumed that a total of less than 5 MHz may be scheduled.

5 MHz may correspond to 25 RBs in the case of 15 kHz SCS, and may correspond to 12 RBs in the case of 30 kHz SCS. In other words, exceeding 5 MHz may be 26 RBs or more for a 15 kHz SCS, or 13 RBs or more for a 30 kHz SCS.

In the case where any two of a unicast PDSCH, a broadcast MBS-PDSCH, or a multicast MBS-PDSCH are scheduled to exceed a total of 5 MHz, the eRedCap terminal may perform the operation described in 1)-8) below.
1) The eRedCap terminal need not receive either or both of the PDSCHs.
2) The eRedCap terminal need not decode either or both of the PDSCHs.
3) The eRedCap terminal may transmit a NACK to either or both of the PDSCHs.
4) The eRedCap terminal need not expect other PDSCH to be scheduled in adjacent N slots. N may be 1, 2, 3, or 4. The other PDSCH may be a unicast PDSCH, a broadcast MBS-PDSCH, a multicast MBS-PDSCH, or other SI-RNTI, P-RNTI, RA-RNTI, MSGB-RNTI, TC-RNTI scheduled PDSCH.
5) The eRedCap terminal may decode both PDSCHs.
6) The eRedCap terminal may receive both PDSCHs.
7) The eRedCap terminal may specify a priority to determine from which PDSCH the eRedCap terminal performs reception, decoding, and/or processing. For example, a higher-priority PDSCH is always received, decoded and/or processed, whereas a lower-priority PDSCH may be received, decoded and/or processed. A NACK may be fed back for PDSCH not received, decoded and/or processed. A higher-priority PDSCH follows an existing HARQ feedback timeline, whereas a lower-priority PDSCH may have an extended HARQ feedback timeline. For example, a lower-priority PDSCH may have an extended HARQ feedback timeline. For example, a priority may be determined for each PDSCH, and by comparing the priorities, it may be determined from which PDSCH reception, decoding, and/or processing is performed.
8) The timeline related to the HARQ feedback of a unicast PDSCH and/or a multicast MBS-PDSCH may be extended. For example, one slot may be added to the existing timeline.

### The above is Option (1).

Option (2): The eRedCap terminal need not assume that any two or more of a unicast PDSCH, a broadcast MBS-PDSCH, and a multicast MBS-PDSCH are scheduled in the same slot and/or in adjacent slots.

### The above is Option (2).

Based on whether HARQ feedback is enabled or disabled for a multicast MBS-PDSCH, a decision may be made as to whether to perform Option (1) or Option (2) above. Signaling of the UE capability indicating whether to support Option (1) and/or Option (2) above may be specified.

For example, the operations described in 1)-3) below may be performed.
1) The eRedCap terminal may assume that a unicast PDSCH and a broadcast MBS-PDSCH may be scheduled to the same slot for a total of more than 5 MHz.
2) The eRedCap terminal may assume that a unicast PDSCH and a multicast MBS-PDSCH when HARQ feedback is disabled may be scheduled to the same slot and/or adjacent slots for a total of more than 5 MHz.
3) The eRedCap terminal may assume that a multicast MBS-PDSCH and a broadcast MBS-PDSCH in the case where HARQ feedback is disabled may be scheduled in the same slot and/or adjacent slots for a total of more than 5 MHz.

Common to the above items 1)-3), both PDSCHs may be received and/or decoded; which PDSCH(s) are received and/or decoded may differ depending on the UE capability; which PDSCH(s) are received and/or decoded may be determined based on the UE capability; and a priority of which PDSCH to receive and/or decode may be specified by the technical specification.

In the above 1)-3), it may be assumed that no other PDSCH is scheduled in the adjacent slot.

In the case where the operation is supported, a UE capability indicating that the operation is supported may be reported.

The eRedCap terminal need not assume that a unicast PDSCH and a multicast MBS-PDSCH with HARQ feedback enabled may be scheduled in the same slot and/or the adjacent slot with a total bandwidth exceeding 5 MHz.

The eRedCap terminal need not assume that a multicast MBS-PDSCH and a broadcast MBS-PDSCH with HARQ feedback enabled may be scheduled in the same slot and/or the adjacent slots for a total bandwidth exceeding 5 MHz.

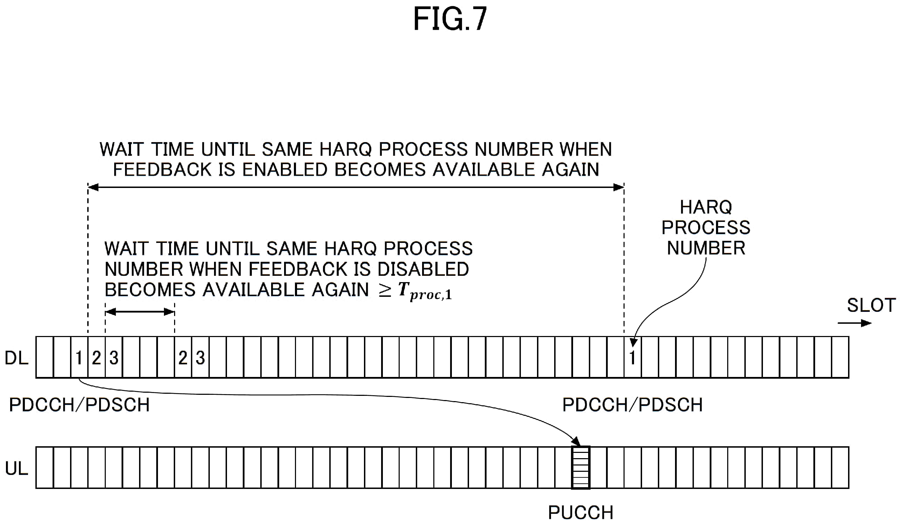

FIG. 7 is a diagram illustrating an example of HARQ feedback according to the embodiment of the present invention. As illustrated in FIG. 7, for a PDSCH in the NTN (Non-Terrestrial Network), in the case where HARQ feedback is disabled, the HPN (HARQ Process Number) can be used again after the processing time T_{proc,1} related to the reception of a PDSCH has elapsed. As illustrated in FIG. 7, in the case where HARQ feedback is enabled, the HPN can be used again after a PUCCH carrying HARQ feedback is received.

Herein, the HPN is assigned to a multicast MBS-PDSCH scheduled by a G-RNTI or a G-CS-RNTI. Since HARQ feedback can be disabled for a multicast MBS-PDSCH, the network cannot know when the HPN assigned to a PDSCH can be reused.

Furthermore, the eRedCap terminal must assume a processing time different from that of the existing terminal in the case where the resource exceeding 5 MHz is allocated for a multicast MBS-PDSCH.

Therefore, in the case where HARQ feedback of a multicast MBS-PDSCH is disabled for the eRedCap terminal, the time until the release of the HPN of the PDSCH may be extended to T_{proc,1}+X. The extended time until the release of the HPN of the PDSCH may be applied to the case illustrated in 1) or 2) below, but is not limited thereto. In other words, in the case where HARQ feedback of a multicast MBS-PDSCH is disabled for the eRedCap terminal, the time until the release of the HPN of a PDSCH may be extended beyond the processing time T_{proc,1} associated with the reception of a PDSCH reception.
1) This may be applied in the case where the bandwidth of the multicast MBS-PDSCH is allocated exceeding 5 MHz.
2) This may be applied in the case where the total bandwidth of the multicast MBS-PDSCH and the PDSCH multiplexed in the same slot is allocated exceeding 5 MHz.

The unit of the value of X may be any one of microseconds, milliseconds, symbols, and slots, but is not limited thereto. X may be one slot. For example, T_{proc,1}+1 milliseconds may be applied to the case of 15 kHz SCS, and T_{proc,1}+0.5 milliseconds may be applied to the case of 30 kHz SCS.

The value of X may be different depending on the SCS of a PDSCH, or may be determined based on the SCS of a PDSCH. For example, X = X' in the case of 15 kHz SCS, and X = 2X' in the case of 30 kHz SCS. The value of X may be different depending on the UE capability.

A different value of X may be defined depending on the bandwidth of a multicast MBS-PDSCH, or the value of X may be determined based on the bandwidth. For example, the value of X may be defined or determined as illustrated in 1)-4) below.
1) X = X' × N_MuliticastPDSCH
2) X = X' × N_MuliticastPDSCH/N_XRB
3) X = X' × [N_MuliticastPDSCH/N_XRB]
4) X = X1, if 0 < N_MuliticastPDSCH ≤ N_RB1
   X = X2, ifN_RB1 < N_MuliticastPDSCH ≤ N_RB2
   X= ...
   X = Xn, if N_RBn-1 < N_MuliticastPDSCH ≤ N_RBn
   Note that X may be X' × Floor (N_MuliticastPDSCH/N_XRB) or X' × Ceil (N_MuliticastPDSCH/N_XRB).

N_MuliticastPDSCH may be the number of RBs allocated to a multicast MBS-PDSCH. N_XRB may be the number of RBs (25 RBs for 15 kHz SCS, 12 RBs for 30 kHz SCS) corresponding to 5 MHz or the number of RBs specified by other technical specifications.

X' > 0 may hold true. The unit of the value of X' may be any one of microseconds, milliseconds, symbols, and slots, but is not limited thereto.

As for the value of X, a single value may be specified by the technical specification without depending on the SCS and/or PDSCH bands.

For example, in the case where HARQ feedback of a multicast MBS-PDSCH is disabled for the eRedCap terminal, with respect to the time until the release of the HPN of the PDSCH, T_{proc,1} may be multiplied by a constant value, and may be expanded to, for example, X×T_{proc,1}.

In the case where HARQ feedback of a multicast MBS-PDSCH is disabled for the eRedCap terminal, the HPN field may not be assumed for the DCI for scheduling the PDSCH. The HPN field may be assumed to be 0 bits, or the value notified in the HPN field may be ignored.

According to the embodiment described above, the terminal 20 serving as an eRedCap UE can separately configure a CFR corresponding to the terminal capability and receive a transmission from the base station 10 by the MBS function. The eRedCap terminal can appropriately receive a multiplexed PDSCH. The eRedCap terminal can also appropriately perform an operation related to HARQ feedback of a multicast MBS-PDSCH.

In other words, in a radio communication system, a terminal having reduced functions can support the MBS (Multicast-Broadcast Services) function.

### (Device Configuration)

Next, functional configuration examples of the base station 10 and the terminal 20, which perform the processes and operations described above, will be described. The base station 10 and the terminal 20 include functions for implementing the above-described embodiments. However, the base station 10 and the terminal 20 may each include only a part of the functions in the embodiments.

### <Base Station 10>

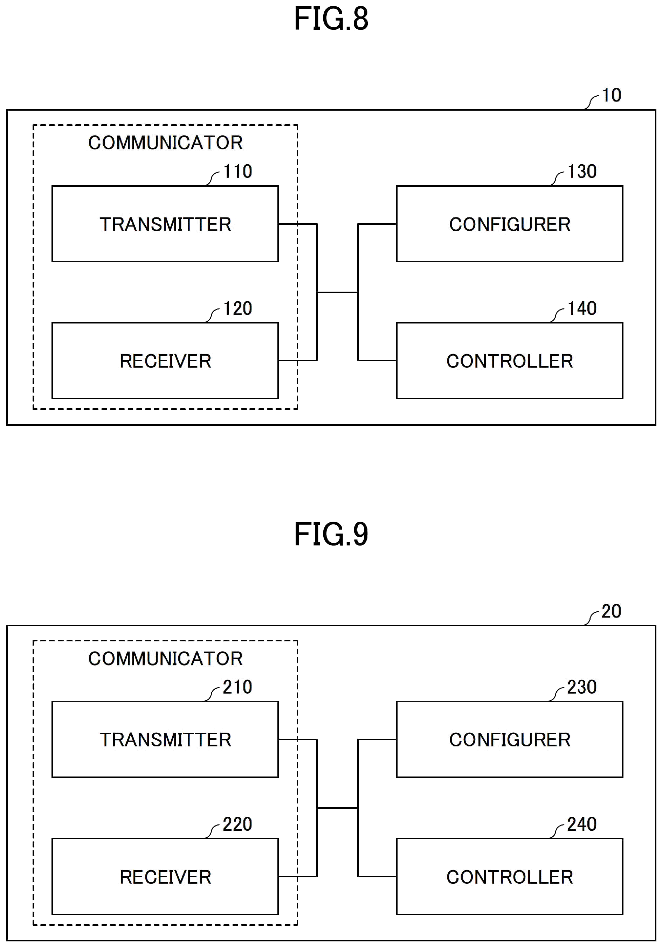

FIG. 8 is a diagram illustrating an example of the functional configuration of the base station 10 according to the embodiment of the present invention. As illustrated in FIG. 8, the base station 10 includes a transmitter 110, a receiver 120, a configurer 130, and a controller 140. The functional configuration illustrated in FIG. 8 is only an example. As long as it can perform the operations according to the embodiments of the present invention, the names of the functional divisions and functional units may be freely chosen.

The transmitter 110 includes a function of generating a signal to be transmitted to the terminal 20 and wirelessly transmitting the signal. The transmitter 110 also transmits an inter-network node message to another network node. The receiver 120 includes a function of receiving various signals transmitted from the terminal 20 and acquiring, for example, information of a higher layer from the received signal. The transmitter 110 also has a function of transmitting NR-PSS, NR-SSS, NR-PBCH, DL/UL control signals and other similar signals to the terminal 20. The receiver 120 receives an inter-network node message from another network node.

The configurer 130 stores preset configuration information and various configuration information items to be transmitted to the terminal 20. The content of the configuration information are, for example, information related to the MBS function.

The controller 140 performs control for realizing the function described in the embodiment. The controller 140 also performs control related to the MBS function as described in the embodiment. A functional unit related to signal transmission in the controller 140 may be included in the transmitter 110, and a functional unit related to signal reception in the controller 140 may be included in the receiver 120.

### <Terminal 20>

FIG. 9 is a diagram illustrating an example of the functional configuration of the terminal 20 according to the embodiment of the present invention. As illustrated in FIG. 9, the terminal 20 includes a transmitter 210, a receiver 220, a configurer 230, and a controller 240. The functional configuration illustrated in FIG. 9 is only an example. As long as it can perform the operations according to the embodiments of the present invention, the names of the functional divisions and functional units may be freely chosen.

The transmitter 210 generates a transmission signal from the transmission data and wirelessly transmits the transmission signal. The receiver 220 wirelessly receives various signals and acquires a signal of a higher layer from the received signal of a physical layer. The receiver 220 also has a function of receiving NR-PSS, NR-SSS, NR-PBCH, DL/UL/SL control signals and other similar signals transmitted from the base station 10. For example, the transmitter 210 transmits a PSCCH (Physical Sidelink Control Channel), a PSSCH (Physical Sidelink Shared Channel), a PSDCH (Physical Sidelink Discovery Channel), a PSBCH (Physical Sidelink Broadcast Channel) and other channels to another terminal 20 as D2D communication, and the receiver 220 receives a PSCCH, a PSSCH, a PSDCH, a PSBCH and other channels from another terminal 20.

The configurer 230 stores various configuration information items received by the receiver 220 from the base station 10. The configurer 230 also stores configuration information configured in advance. The content of the configuration information are, for example, information related to the MBS function.

The controller 240 performs control for realizing the function described in the embodiment. The controller 240 also performs control related to the MBS function as described in the embodiment. A functional unit related to signal transmission in the controller 240 may be included in the transmitter 210, and a functional unit related to signal reception in the controller 240 may be included in the receiver 220.

### (Hardware Structure)

The block diagrams that have been used to describe the above embodiments (FIG. 8 and FIG. 9) show blocks in functional units. These functional blocks (components) may be implemented in arbitrary combinations of at least one of hardware or software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, the functional block (component) to implement a function of transmission may be referred to as a transmitting unit or a transmitter. The method for implementing each component is not particularly limited as described above.

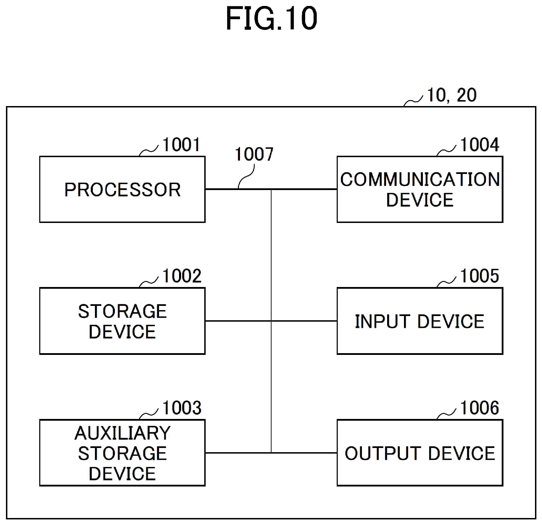

For example, the base station 10, the terminal 20, etc., according to an embodiment of the present disclosure may function as a computer for processing the radio communication method of the present disclosure. FIG. 10 is a diagram to show an example of a hardware structure of the base station 10 and the terminal 20 according to one embodiment. Physically, the above-described base station 10 and terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the terminal 20 may be configured to include one or more of apparatuses shown in the drawings, or may be configured not to include part of apparatuses.

Each function of the base station 10 and the terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading or writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, the above-described controller 140, controller 240, and so on may be implemented by the processor 1001.

Furthermore, the processor 1001 reads programs (program codes), software modules, data, or the like, from at least one of the storage 1003 and the communication apparatus 1004, into the memory 1002, and executes various processes according to these. As for the programs, programs to allow computers to execute at least part of the operations of the above-described embodiments are used. For example, the controller 140 of the base station 10 illustrated in FIG. 8 may be implemented by control programs that are stored in the memory 1002 and that operate on the processor 1001. In addition, for example, the controller 240 of the terminal 20 illustrated in FIG. 9 may be implemented by control programs that are stored in the memory 1002 and that operate on the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The memory 1002 is a computer-readable recording medium, and may be constituted with, for example, at least one of a Read Only Memory (ROM), an Erasable Programmable ROM (EPROM), an Electrically Erasable Programmable ROM (EEPROM), a Random Access Memory (RAM), or other appropriate storage media. The memory 1002 may be referred to as a "register", a "cache", a "main memory (primary storage apparatus)" and so on. The memory 1002 can store executable programs (program codes), software modules, and the like for implementing the communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, or other appropriate storage media. The above recording medium may be a database including the memory 1002 and/or the storage 1003, a server, or any other appropriate medium.

The communication apparatus 1004 is hardware (transmitting/receiving device) for allowing inter-computer communication via at least one of wired or wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) or time division duplex (TDD). For example, the transmitting/receiving antenna, the amplifier, the transmitter/receiver, the transmission line interface, and the like, may be implemented by the communication apparatus 1004. The transmitter/receiver may be physically or logically divided into a transmitter and a receiver.

The input apparatus 1005 is an input device that receives input from the outside (for example, a keyboard, a mouse, a microphone, a switch, a button, a sensor, and so on). The output apparatus 1006 is an output apparatus that outputs something to the outside (e.g., display, speaker, LED lamp). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

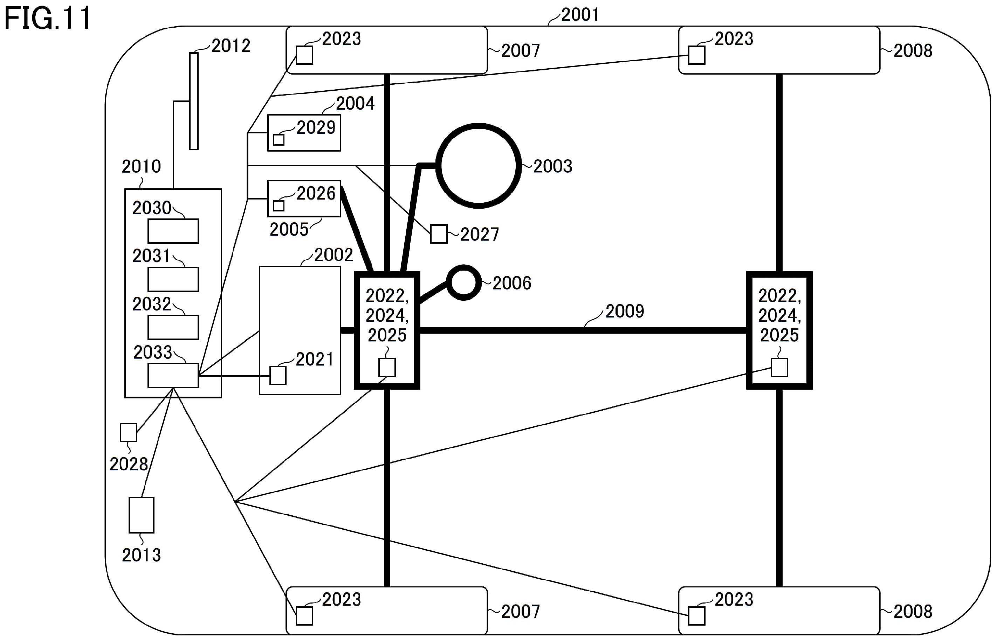

FIG. 11 shows an example of a configuration of a vehicle 2001. As shown in FIG. 11, the vehicle 2001 includes a driver 2002, a steerer 2003, an accelerator pedal 2004, a brake pedal 2005, a shift lever 2006, a front wheel 2007, a rear wheel 2008, an axle 2009, an electronic controller 2010, various sensors 2021-2029, an information service provider 2012, and a communication module 2013. The aspects/embodiments described in the present disclosure may be applied to a communication device mounted in the vehicle 2001, and may be applied to, for example, the communication module 2013.

The driver 2002 may include, for example, an engine, a motor, and a hybrid of an engine and a motor. The steerer 2003 includes at least a steering wheel and is configured to steer at least one of the front wheel or the rear wheel, based on the operation of the steering wheel operated by the user.

The electronic controller 2010 includes a microprocessor 2031, a memory (ROM, RAM) 2032, and a communication port (IO port) 2033. The electronic controller 2010 receives signals from the various sensors 2021-2029 provided in the vehicle 2001. The electronic controller 2010 may be referred to as an ECU (Electronic Control Unit).

The signals from the various sensors 2021 to 2029 include a current signal from a current sensor 2021 that senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service provider 2012 includes various devices for providing (outputting) various kinds of information such as driving information, traffic information, and entertainment information, including a car navigation system, an audio system, a speaker, a television, and a radio, and one or more ECUs controlling these devices. The information service provider 2012 provides various types of multimedia information and multimedia services to the occupants of the vehicle 2001 by using information obtained from the external device through the communication module 2013 or the like. The information service provider 2012 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving support system section 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system section 2030 transmits and receives various types of information via the communication module 2013 to realize a driving support function or an autonomous driving function.

The communication module 2013 can communicate with the microprocessor 2031 and components of the vehicle 2001 via a communication port. For example, the communication module 2013 transmits and receives data via a communication port 2033, to and from the driver 2002, the steerer 2003, the accelerator pedal 2004, the brake pedal 2005, the shift lever 2006, the front wheel 2007, the rear wheel 2008, the axle 2009, the microprocessor 2031 and the memory (ROM, RAM) 2032 in the electronic controller 2010, and sensors 2021 to 2029 provided in the vehicle 2001.

The communication module 2013 is a communication device that can be controlled by the microprocessor 2031 of the electronic controller 2010 and that is capable of communicating with external devices. For example, various kinds of information are transmitted to and received from external devices through radio communication. The communication module 2013 may be internal to or external to the electronic controller 2010. The external devices may include, for example, a base station, a mobile station, or the like.

The communication module 2013 may transmit, to an external device by using wireless communications, at least one of: a signal from the above-described various sensors 2021 to 2028 that is input to the electronic controller 2010; information that is obtained based on the signal; or information based on an input obtained from outside (user) via the information service provider 2012. The electronic controller 2010, the various sensors 2021 to 2028, the information service provider 2012, or the like, may be referred to as an input unit for receiving an input. For example, the PUSCH transmitted by the communication module 2013 may include information based on the input.

The communication module 2013 receives various types of information (traffic information, signal information, inter-vehicle information, etc.) transmitted from the external devices and displays the received information on the information service provider 2012 provided in the vehicle 2001. The information service provider 2012 may be referred to as an output unit that outputs information (for example, outputs information to devices, such as a display and a speaker, based on the PDSCH received by the communication module 2013 (or data/information decoded from the PDSCH)). In addition, the communication module 2013 stores the various types of information received from the external devices in the memory 2032 available to the microprocessor 2031. Based on the information stored in the memory 2032, the microprocessor 2031 may control the driver 2002, the steerer 2003, the accelerator pedal 2004, the brake pedal 2005, the shift lever 2006, the front wheel 2007, the rear wheel 2008, the axle 2009, the sensors 2021-2029, etc., mounted in the vehicle 2001.

### (Summary of Embodiment)

As described above, according to the embodiment of the present invention, there is provided a terminal including a receiver configured to receive a multicast multicast-broadcast services (MBS)-physical downlink shared channel (PDSCH) from a base station; and a controller configured to extend, when hybrid automatic repeat request (HARQ) feedback of the multicast MBS-PDSCH is disabled, a period of time until a HARQ process number (HPN) corresponding to the multicast MBS-PDSCH is released.

According to the aspect described above, it is possible for the terminal 20 as an eRedCap UE to appropriately perform an operation related to HARQ feedback of a multicast MBS-PDSCH. In other words, in a radio communication system, a terminal having reduced functions can support the MBS (Multicast-Broadcast Services) function.

When a bandwidth of the multicast MBS-PDSCH exceeds 5 MHz and the HARQ feedback of the multicast MBS-PDSCH is disabled, the controller may extend the period of time until the HPN corresponding to the multicast MBS-PDSCH is released. According to this aspect, it is possible to configure the HPN release time for an eRedCap UE according to its processing load.

When a total bandwidth of the multicast MBS-PDSCH and a PDSCH to be multiplexed exceeds 5 MHz and the HARQ feedback of the multicast MBS-PDSCH is disabled, the controller may extend the period of time until the HPN corresponding to the multicast MBS-PDSCH is released. According to this aspect, it is possible to configure the HPN release time for an eRedCap UE according to its processing load.

When the HARQ feedback of the multicast MBS-PDSCH is disabled, the controller may extend the period of time until the HPN corresponding to the multicast MBS-PDSCH is released, based on a number of resource blocks allocated to the multicast MBS-PDSCH. According to this aspect, it is possible to configure the HPN release time for an eRedCap UE according to its processing load.

When the HARQ feedback of the multicast MBS-PDSCH is disabled, the controller may extend the period of time until the HPN corresponding to the multicast MBS-PDSCH is released, based on a value obtained by dividing the number of resource blocks allocated to the multicast MBS-PDSCH by a number of resource blocks corresponding to 5 MHz. According to this aspect, it is possible to configure the HPN release time for an eRedCap UE according to its processing load.

According to the embodiment of the present invention, there is provided a communication method executed by a terminal, the communication method including receiving a multicast multicast-broadcast services (MBS)-physical downlink shared channel (PDSCH) from a base station; and extending, when hybrid automatic repeat request (HARQ) feedback of the multicast MBS-PDSCH is disabled, a period of time until a HARQ process number (HPN) corresponding to the multicast MBS-PDSCH is released.

According to the aspect described above, it is possible for the terminal 20 as an eRedCap UE to appropriately perform an operation related to HARQ feedback of a multicast MBS-PDSCH. In other words, in a radio communication system, a terminal having reduced functions can support MBS (Multicast-Broadcast Services) functions.

### (Supplement of Embodiment)

As described above, one or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction). Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described in an embodiment of the present invention may be changed as long as there is no contradiction. For the sake of description convenience, the base station 10 and the terminal 20 have been described by using functional block diagrams. However, the apparatuses may be realized by hardware, software, or a combination of hardware and software. The software executed by a processor included in the base station 10 according to an embodiment of the present invention and the software executed by a processor included in the terminal 20 according to an embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate recording medium.

In addition, notification of information is by no means limited to the aspects/embodiments described in the present disclosure, and other methods may be used as well. For example, the information indication may be performed by physical layer signaling (e.g., DCI (Downlink Control Information), UCI (Uplink Control Information)), upper layer signaling (e.g., RRC (Radio Resource Control) signaling, MAC (Medium Access Control) signaling, broadcast information (MIB (Master Information Block), SIB (System Information Block))), other signals, or combinations thereof. Also, RRC signaling may be referred to as an "RRC message", and can be, for example, an RRC connection setup message, an RRC connection reconfiguration message, and so on.

Each aspect/embodiment described in the present disclosure may be applied to at least one of a system using LTE (Long Term Evolution), LTE-A (LTE-Advanced), SUPER 3G, IMT-Advanced, 4G (4th generation mobile communication system), 5G (5th generation mobile communication system), FRA (Future Radio Access), NR (new Radio), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), and other appropriate systems, and a next generation system enhanced therefrom. A plurality of systems may be combined (for example, a combination of LTE or LTE-A and 5G, and the like) for application.

The order of processes, sequences, flowcharts, and so on that have been used to describe the aspects/embodiments in the present specification may be re-ordered as long as inconsistencies do not arise. For example, although various methods have been illustrated in the present disclosure with various components of steps in exemplary orders, the specific orders that are illustrated herein are by no means limiting.

Operations which have been described in the present specification to be performed by a base station 10 may, in some cases, be performed by an upper node of the base station 10. In a network including one or a plurality of network nodes with base stations 10, it is clear that various operations that are performed to communicate with terminals 20 can be performed by base stations 10, one or more network nodes (for example, Mobility Management Entities (MMEs), Serving-Gateways (S-GWs), and so on may be possible, but these are not limiting) other than base stations 10, or combinations of these. According to the above, a case is described in which there is a single network node other than the base station 10. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be realized by a value (0 or 1) represented by one bit, by a boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms "Base Station (BS)", "Radio Base Station", "Base Station Apparatus", "Fixed Station", "NodeB", "eNodeB (eNB)", "gNodeB (gNB)", "Access Point", "Transmission Point", "Reception Point", "Transmission/Reception Point", "Cell", "Sector", "Cell Group", "Carrier", "Component Carrier", and the like, may be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station or a base station subsystem that provides communication services within this coverage.

In the present disclosure, transmitting information to the terminal by the base station may be referred to as instructing the terminal to perform any control and/or operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station or a mobile station may be referred to as a "transmitting apparatus", a "receiving apparatus", a "radio communication apparatus", and so on. Note that at least one of a base station or a mobile station may be a device mounted on a moving object or a moving object itself, and so on. The mobile station is an object that can move, and the moving speed can be any speed. In addition, a mobile station that is not moving is also included. Examples of the moving object include, but are not limited to, a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone (registered trademark), a multicopter, a quadcopter, a balloon, and an object mounted on any of these. The moving object may be a moving object that autonomously travels based on a direction for moving. The moving object may be a vehicle (for example, a car, an airplane, and the like), may be a moving object which moves unmanned (for example, a drone, an automatic operation car, and the like), or may be a robot (a manned type or unmanned type). Note that at least one of a base station or a mobile station also includes an apparatus which does not necessarily move during communication operation. For example, at least one of the base station or the mobile station may be an IoT (Internet of Things) device such as a sensor.

Furthermore, the base station in the present disclosure may be interpreted as a user terminal. For example, each aspect/embodiment of the present disclosure may be applied to the structure that replaces a communication between a base station and a user terminal with a communication between a plurality of terminals 20 (for example, which may be referred to as "Device-to-Device (D2D)", "Vehicle-to-Everything (V2X)", and the like). In this case, terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station may have the functions of the user terminal described above.

As used herein, the term "determining" may encompasses a wide variety of actions. For example, "determining" may be regarded as judging, calculating, computing, processing, deriving, investigating, looking up (search, inquiry) (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing, comparing, and the like. That is, "determining" may be regarded as a certain type of action related to determining. Further, "decision" may be read as "assuming", "expecting", or "considering", etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

A reference signal may be abbreviated as an "RS", and may be referred to as a "pilot", and so on, depending on which standard applies.

The phrase "based on" (or "on the basis of') as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

"Means" included in the configuration of each of the above apparatuses may be replaced by "parts", "circuits", "devices", etc.

In the case where the terms "include", "including" and variations thereof are used in the present disclosure, these terms are intended to be comprehensive in the same way as the term "comprising". Further, the term "or" used in the present specification is not intended to be an "exclusive or".

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Numerology may be a communication parameter applied to at least one of transmission or reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, or the like.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols less than the number of slots. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms.

For example, one subframe may be referred to as a transmission time interval, "TTI", a plurality of consecutive subframes may be referred to as a "TTI", or one slot or one mini-slot may be referred to as a "TTI". In other words, at least one of a subframe or a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for terminals 20, scheduling of allocating radio resources (such as a frequency bandwidth and transmit power available for each terminal 20) in TTI units. Note that the definition of the TTI is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in LTE Rel. 8 to Rel. 12), a "long TTI", a "normal subframe", a "long subframe", a "slot", or the like. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, or the like) may be interpreted as a TTI having a time length exceeding 1 ms, and a short TTI (for example, a shortened TTI or the like) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

An RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)",a "PRB pair", an "RB pair" and so on.

Furthermore, a resource block may be constituted of one or a plurality of resource elements (Res). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). For a UE, one or more BWPs may be configured in one carrier.

At least one of the configured BWPs may be activated, and the UE may assume that the UE will not transmit and receive signals/channels outside the activated BWP. Note that a "cell", a "carrier", and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

In the present disclosure, where an article is added by translation, for example "a", "an", and "the", the disclosure may include that the noun following these articles is plural.

In this disclosure, the term "A and B are different" may mean "A and B are different from each other". It should be noted that the term "A and B are different" may mean "A and B are different from C". Terms such as "separated" or "combined" may be interpreted in the same way as the above-described "different".

An aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

Although the present disclosure has been described in detail above, it will be apparent to those skilled in the art that the present disclosure is not limited to the embodiments described in the present disclosure. The present disclosure may be modified and modified without departing from the spirit and scope of the present disclosure as defined by the appended claims. Accordingly, the description of the present disclosure is for illustrative purposes only and does not have any restrictive meaning to the present disclosure.

### DESCRIPTION OF THE REFERENCE NUMERALS

- 10: Base Station
- 110: Transmitter
- 120: Receiver
- 130: Configurer
- 140: Controller
- 20: Terminal
- 210: Transmitter
- 220: Receiver
- 230: Configurer
- 240: Controller
- 30: Core Network
- 1001: Processor
- 1002: Storage device
- 1003: Auxiliary Storage device
- 1004: Communication Device
- 1005: Input Device
- 1006: Output device
- 2001: Vehicle
- 2002: Driver
- 2003: Steerer
- 2004: Accelerator pedal
- 2005: Brake pedal
- 2006: Shift lever
- 2007: Front wheel
- 2008: Rear wheel
- 2009: Axle
- 2010: Electronic controller
- 2012: Information service provider
- 2013: Communication module
- 2021: Current sensor
- 2022: Rotation speed sensor
- 2023: Air pressure sensor
- 2024: Vehicle speed sensor
- 2025: Acceleration sensor
- 2026: Brake pedal sensor
- 2027: Shift lever sensor
- 2028: Object detection sensor
- 2029: Axel pedal sensor
- 2030: Driving support system section
- 2031: Microprocessor
- 2032: Memory (ROM, RAM)
- 2033: Communication port (IO port)

## Claims

1. A terminal comprising:
a receiver configured to receive a multicast MBS (multicast-broadcast services)- PDSCH (physical downlink shared channel) from a base station; and
a controller configured to extend, when HARQ (hybrid automatic repeat request) feedback of the multicast MBS-PDSCH is disabled, a period of time until an HPN (HARQ process number) corresponding to the multicast MBS-PDSCH is released.

2. The terminal according to claim 1, wherein
the control extends, when a bandwidth of the multicast MBS-PDSCH exceeds 5 MHz and the HARQ feedback of the multicast MBS-PDSCH is disabled, the period of time until the HPN corresponding to the multicast MBS-PDSCH is released.

3. The terminal according to claim 1, wherein
the controller extends, when a total bandwidth of the multicast MBS-PDSCH and a PDSCH to be multiplexed exceeds 5 MHz and the HARQ feedback of the multicast MBS-PDSCH is disabled, the period of time until the HPN corresponding to the multicast MBS-PDSCH is released.

4. The terminal according to claim 1, wherein
the controller extends, when the HARQ feedback of the multicast MBS-PDSCH is disabled, the period of time until the HPN corresponding to the multicast MBS-PDSCH is released, based on a number of resource blocks allocated to the multicast MBS-PDSCH.

5. The terminal according to claim 1, wherein
the controller extends, when the HARQ feedback of the multicast MBS-PDSCH is disabled, the period of time until the HPN corresponding to the multicast MBS-PDSCH is released, based on a value obtained by dividing the number of resource blocks allocated to the multicast MBS-PDSCH by a number of resource blocks corresponding to 5 MHz.

6. A communication method executed by a terminal, the communication method comprising:
receiving a multicast MBS (multicast-broadcast services)- PDSCH (physical downlink shared channel) from a base station; and
extending, when HARQ (hybrid automatic repeat request) feedback of the multicast MBS-PDSCH is disabled, a period of time until an HPN (HARQ process number) corresponding to the multicast MBS-PDSCH is released.
